# EUROPEAN PATENT APPLICATION

(11) **EP 4 773 588 A1**
(43) Date of publication of application: **08.07.2026**
(21) Application number: 25227013.7
(22) Date of filing: 23.12.2025
(51) Int. Cl.: H04N 7/14, H04N 7/15

(54) **ALTERING VIDEOCONFERENCE FEEDS USING HISTORICAL AND IN-SESSION INFERRENCES**

(30) Priority: 02.01.2025 US 202519008237
(71) Applicant: Mitel Networks Corporation, Ottawa, Ontario K2K 3K1 (CA)
(72) Inventor: Braganza, Jonathan, Ottawa, K2E 6P2 (CA); Naidoo, Logendra, Ottawa, K1S 0W8 (CA)
(74) Representative: McDougall, James

(57) **Abstract**

Systems and methods including one or more processors and one or more non-transitory storage devices storing computing instructions configured to run on the one or more processors and perform acts of analyzing historical videoconference data for a plurality of video conference participants to define one or more engagement metrics; receiving one or more video conference feeds comprising the at least one video conference participant; analyzing one or more contributions of the at least one video conference participant during the one or more video conference feeds using at least one of the historical videoconference data, the one or more behavioral science labels, the one or more engagement metrics, and a predictive software application; generating a real time engagement score for the at least one video conference participant based on the analysis of the one or more contributions; and coordinating displaying the real time engagement score. Other embodiments are disclosed herein.

## Description

### TECHNICAL FIELD

This disclosure relates generally to videoconferencing software and more particularly to software for altering videoconferencing feeds in view of historical and in-session actions of participants in the videoconference.

### BACKGROUND

In modern videoconferencing systems, such as those used in virtual meetings, online events, and remote collaboration, participant engagement often poses a significant challenge. While these systems effectively facilitate communication across distances, they frequently fail to replicate the sense of involvement and connection typically experienced in face-to-face interactions. This lack of engagement can lead to reduced productivity, decreased participation, and diminished user satisfaction.

Efforts to address these issues have included introducing features such as virtual backgrounds, real-time filters, and augmented reality overlays. While these tools can enhance the aesthetic appeal of video feeds, they often fall short of actively encouraging and increasing user involvement. Further, modifying video feeds in real-time often requires substantial computational resources, particularly for tasks such as facial recognition or object tracking. These operations can be computationally expensive, leading to delays or degraded performance (especially in systems with limited hardware capabilities), which makes participant engagement degrade further.

Therefore, there is a need for improved methods and systems to dynamically alter video feeds in a way that fosters greater engagement among participants.

### BRIEF DESCRIPTION OF THE DRAWINGS

To facilitate further description of the embodiments, the following drawings are provided in which:
FIG. 1 illustrates a flowchart for a method, according to an embodiment;
FIG. 2 illustrates a representative block diagram of a computer network, according to an embodiment; and
FIG. 3 illustrates a representative block diagram of a computer system, according to an embodiment.

### DESCRIPTION OF EXAMPLES OF EMBODIMENTS

A number of embodiments can include a system. The system can include one or more processors and one or more non-transitory computer-readable storage devices. The one or more non-transitory computer-readable storage devices can store computing instructions. The computing instructions can be configured to communicate with the one or more processors and cause the one or more processors to perform analyzing historical videoconference data for a plurality of video conference participants to define one or more engagement metrics; determining one or more historical performance trends for at least one engagement metric of the one or more engagement metrics for at least one video conference participant of the plurality of video conference participants; applying one or more behavioral science labels to the at least one video conference participant, wherein the one or more behavioral science labels are determined using the one or more historical performance trends for the at least one engagement metric; receiving one or more video conference feeds comprising the at least one video conference participant; analyzing one or more contributions of the at least one video conference participant during the one or more video conference feeds using at least one of the historical videoconference data, the one or more behavioral science labels, the one or more engagement metrics, and a predictive software application; generating a real time engagement score for the at least one video conference participant based on the analysis of the one or more contributions; and simultaneously coordinating displaying the real time engagement score and the video conference feed.

Various embodiments include a method. The method can be implemented via execution of computing instructions configured to run at one or more processors and/or configured to be stored at non-transitory computer-readable media The method can comprise analyzing historical videoconference data for a plurality of video conference participants to define one or more engagement metrics; determining one or more historical performance trends for at least one engagement metric of the one or more engagement metrics for at least one video conference participant of the plurality of video conference participants; applying one or more behavioral science labels to the at least one video conference participant, wherein the one or more behavioral science labels are determined using the one or more historical performance trends for the at least one engagement metric; receiving one or more video conference feeds comprising the at least one video conference participant; analyzing one or more contributions of the at least one video conference participant during the one or more video conference feeds using at least one of the historical videoconference data, the one or more behavioral science labels, the one or more engagement metrics, and a predictive software application; generating a real time engagement score for the at least one video conference participant based on the analysis of the one or more contributions; and simultaneously coordinating displaying the real time engagement score and the video conference feed.

Various embodiments can include an article of manufacture. The article of manufacture can include a non-transitory, tangible computer readable storage medium. The non-transitory, tangible computer readable storage medium can store instructions that, in response to execution by a computer, cause the computer to perform operations comprising analyzing historical videoconference data for a plurality of video conference participants to define one or more engagement metrics; determining one or more historical performance trends for at least one engagement metric of the one or more engagement metrics for at least one video conference participant of the plurality of video conference participants; applying one or more behavioral science labels to the at least one video conference participant, wherein the one or more behavioral science labels are determined using the one or more historical performance trends for the at least one engagement metric; receiving one or more video conference feeds comprising the at least one video conference participant; analyzing one or more contributions of the at least one video conference participant during the one or more video conference feeds using at least one of the historical videoconference data, the one or more behavioral science labels, the one or more engagement metrics, and a predictive software application; generating a real time engagement score for the at least one video conference participant based on the analysis of the one or more contributions; and simultaneously coordinating displaying the real time engagement score and the video conference feed.

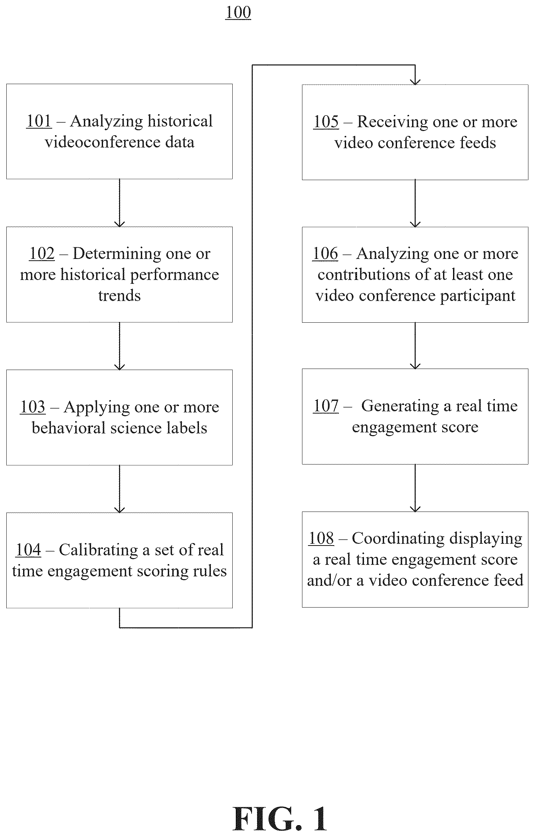

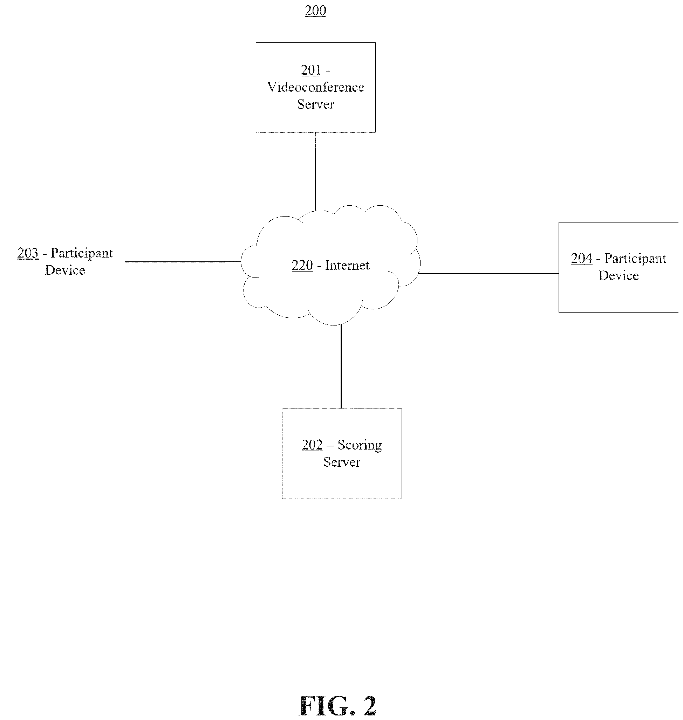

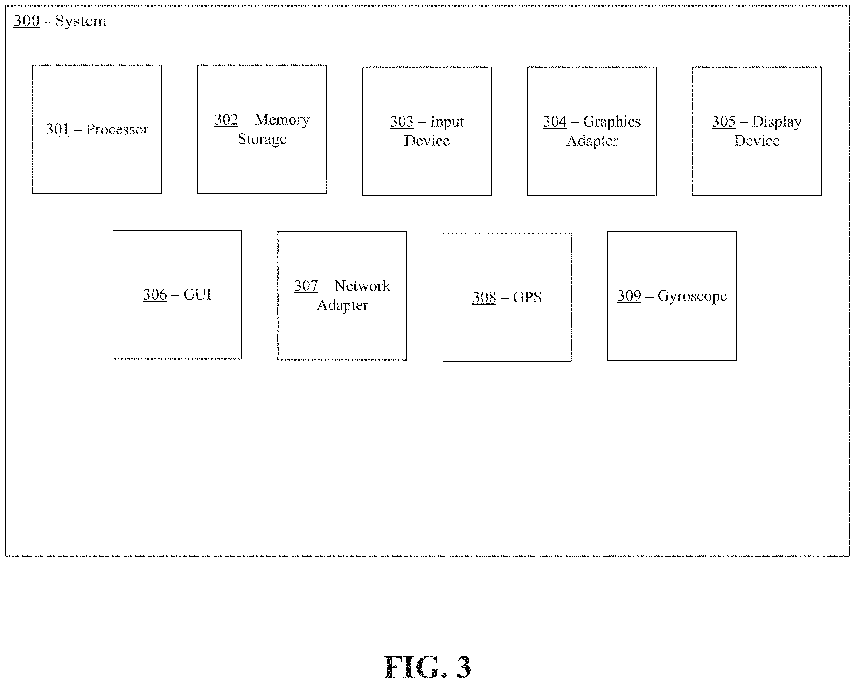

Turning ahead in the drawings, FIG. 1 illustrates a flow chart for a method 100, according to an embodiment. Method 100 is merely exemplary and is not limited to the embodiments presented herein. Method 100 can be employed in many different embodiments or examples not specifically depicted or described herein. In some embodiments, the activities of method 100 can be performed in the order presented. In other embodiments, the activities of method 100 can be performed in any suitable order. In still other embodiments, one or more of the activities of method 100 can be combined or skipped. In many embodiments, system 300 (FIG. 3) can be suitable to perform method 100 and/or one or more of the activities of method 100. In these or other embodiments, one or more of the activities of method 100 can be implemented as one or more computer instructions configured to run at one or more processing modules and configured to be stored at one or more non-transitory memory storage modules. Such non-transitory memory storage modules can be part of a computer system such as videoconference server 201 (FIG. 2), scoring server 202 (FIG. 2), and/or participant devices 203, 204 (FIG. 2). The processing module(s) can be similar or identical to the processing module(s) described above with respect to computer system 300 (FIG. 3.

In many embodiments, method 100 can comprise step 101 of analyzing historical videoconference data. Historical video conference data can comprise various record types logging past videoconferences. For example, historical videoconference data can comprise video recordings of past videoconferences, audio files of past videoconferences, text files comprising video conference transcripts, interaction logs showing, or many other ways of preserving a record of a video conference. Historical vide conference data can be analyzed to extract quantifiable engagement metrics regarding attention, participation, and interaction levels of participants in the videoconference using a variety of techniques. For example, one or more predictive software algorithms (e.g., machine learning and/or artificial intelligence) can be used to analyze historical videoconference data and extract engagement metrics. Engagement metrics can be quantified by assigning a value to the engagement metric. In many embodiments, the value of the engagement metric can be normalized so that different metrics can be compared against each other. A number of different engagement metrics can be extracted in step 101. For example, visual engagement metrics, audio engagement metrics, interaction metrics, attendance metrics, content engagement metrics, group dynamic metrics, and customized and be generated.

Visual engagement metrics can be determined by analyzing video feeds of participants to determine a level of visual attention and responsiveness. For example, time spent by participants looking at their screen can be determined using facial recognition and/or eye-tracking software. More time spent looking at the screen can increase an engagement metric while less time looking at the screen can decrease the engagement metric. As another example, participants' facial expressions can be analyzed to determine emotions such as interest, confusion, or boredom. More interest or confusion can increase an engagement metric while boredom can decrease the engagement metric. As further example, posture detection software can determine whether participants are sitting upright or slouching, which can be indicative of attention levels. Increased attention can increase Speech activity patterns can also be monitored to determine a frequency and timing of verbal communications. Better timed contributions (e.g., not speaking over another participant or responding immediately after a question) and/or higher frequency communications can increase an engagement metric while poorer timed contributions and/or lower frequency communications can decrease an engagement metric.

Audio engagement metrics can be determined by analyzing verbal contributions and auditory behaviors of participants. For example, an amount of speaking time for each participant can be recoded based on a presence or absence of audio signals from the videoconferencing software. Lip reading software can be used to determine when a participant is speaking (even if muted). More speech can increase an engagement metric while less speech can decrease the engagement metric. Voice tone and word choice can be analyzed to determine sentiment of a participant to assess engagement, enthusiasm, or dissatisfaction. More engagement or more enthusiasm can increase an engagement metric while dissatisfaction can decrease the engagement metric.

Interaction metrics can capture a frequency and nature of user interactions with conference tools and/or features. A number and/or a content of messages sent through videoconference software chats, poll and survey participation, and/or reaction (thumbs-up, clapping, or other emotive icons) can be analyzed to determine an interaction metric. More interactions can increase an engagement metric while fewer interactions decrease the engagement metric. Attendance metrics can be developed using join or leave times and/or a duration of attendance in the videoconference. More attendance can increase an attendance metric while less attendance can decrease the attendance metric. Content engagement metrics can measure how participants interact with shared content, (e.g., slides, videos, and/or screen shares). For example, a number of annotations on displayed content and/or a content view time. More content engagements can increase an attendance metric while less content engagements can decrease the attendance metric.

Group dynamic metrics can assess how participants interact with one another. For example, response rates and/or response time can be used to measure an engagement of a user with the videoconference. As another example, collaboration between participants in break-out rooms can be used to measure engagement. As a further example, natural langue processing software can be used to determine various communication based group dynamic metrics. An impact of a participant's comments can be determined by measuring how often a participant's contributions steer a videoconference towards new topics. Depth of discussion can be determined by measuring how long a participant spoke on a specific subject. Innovative discussion can be determined by measuring how often a participant introduces new topics of perspectives in a videoconference. Customized metrics can assess how participants steer a videoconference using one or more pre-determined rubrics. The pre-determined rubrics can be designed using specific organizational goals, personal improvement areas, and/or team dynamics.

In many embodiments, method 100 can comprise step 102 of determining one or more performance trends. Performance trends can be determined at an engagement metric level, at a participant level, and/or for a groups of participants (e.g., for a team). Performance trends can be determined by analyzing engagement metrics and how they change over time. A number of different statistical techniques can be used to determine one or more performance trends. For example, temporal aggregation, time-series analysis, and/or rolling averages can be used to determine performance trends. Temporal aggregation can involve grouping data into pre-defined time periods (e.g., hours, days, weeks, or months) to facilitate trend analysis. Performance metrics (e.g., mean, median, mode, and/or standard deviation) can be calculated for the whole or for each time period, thereby enabling comparisons across intervals vs the whole or vs another interval. For example, daily averages can be computed, weekly totals can be computed, or monthly growth rates can be computed. Temporal aggregation simplifies the identification of long-term patterns and periodic fluctuations. Time-series analysis can examine sequential data points collected over time to uncover trends, seasonal variations, and/or cyclic behaviors. Linear or non-linear regression models can be applied to detect upward or downward trends in performance and/or engagement. Various decomposition methods can be used to separate a seasonal component of the data to reveal underlying seasonal trends. Rolling averages can be computed by averaging data over a sliding window of time, thereby reducing noise and emphasizing significant, quick changes in performance.

In many embodiments, method 100 can comprise step 103 of applying one or more behavior science labels. Behavior science labels can be applied to one or more participants and/or groups of participants. Behavioral science labels can be derived from personality classifications identified using personality tests. Personality tests provide frameworks for categorizing participant traits, behaviors, and tendencies into defined groups and/or dimensions. Personality classification systems can include trait-based models and/or type-based models.

Trait-based models can describe a participant's personality through specific characteristics or traits that are measurable and relatively stable over time. A prominent example is the Five Factor Model (FFM). The FFM can identify at least five primary dimensions of personality: openness to experience, conscientiousness, extraversion, agreeableness, and/or neuroticism. Each dimension can be represented on within a range of values, thereby allowing individuals to exhibit varying degrees of each trait.

Type-based systems classify individuals into discrete personality categories. The Myers-Briggs Type Indicator (MBTI) is one of the most widely recognized type-based systems. MBTI can categorize individuals along four metrics: extraversion versus introversion, sensing versus intuition, thinking versus feeling, and judging versus perceiving. The MBTI metrics can be combined to form sixteen or more personality types. Another type-based system, known as the Enneagram system, can assign individuals to one of nine interconnected personality types based on core motivations and behavioral patterns.

Behavior science labels can be supplied by users prior to a videoconference and/or determined using one or more of historical video conference data and/or performance trends for one or more engagement metrics. In some embodiments, when historical video conference data and/or performance metrics are used, a machine learning software application can be used to analyze and apply the behavioral science labels. A machine learning software application can be understood as a set of software based rules designed to learn from and make decisions based on patterns in a dataset without being explicitly programmed for making the decisions. For example, a machine learning software application can decide what behavioral science labels to apply to a participant.

A machine learning algorithm can comprise a large language model (LLM). A LLM can comprise a type of machine learning algorithm designed to understand human language submitted as text or sound and generate responsive text, images, sounds, or video. Many LLMs can comprise a transformer architecture capable of contextualizing words within natural language. Contextualization of natural language can occur via a process called self-attention. Self-attention allows an LLM to assign weighs representing an importance of each word in a sequence relative to every other word in the sequence. In this way, an LLM can capture dependencies and relationships between words regardless of their distance from each other in the sequence of words.

In various embodiments, historical video conference data and/or performance metrics can be fed into an LLM based computer vision system along with one or more text based prompts. A text based prompt can comprise a system message and a user message. A system message can instruct an LLM based computer vision system how to interpret instructions with historical video conference data and/or performance metrics submitted for classification. For example, a system message can instruct an LLM to act as psychologist and apply one or more behavioral science labels to a participant in a video conference using their historical video conference data and/or performance metrics. The system message can be repeated for each participant ensure accuracy and prevent hallucinations. In various embodiments, a user message can instruct the LLM based machine vision system to identify specific sets of behavioral science labels and/or apply a particular personality classification system. In various embodiments, user prompts requesting behavioral science labels can be entered into new prompt/response interfaces for an LLM and/or progressively entered into a single prompt/response interface.

In many embodiments, method 100 can comprise step 104 calibrating a set of real time engagement scoring rules. Scoring rules can be used during future or current videoconferences to determine engagement score for display. A number of different scoring rules can be calibrated during step 104. For example, an accelerator rule, a decelerator rule, and/or a can be calibrated. An accelerator rule will increase by multiples and/or add to a participants engagement score. Accelerator rules can be modified and/or customized based on one or more behavioral science labels applied to a participant. Participants identified as extroverts in MBTI can have an accelerator rule applied when making frequent verbal contributions. Participants identified as introverts in MBTI can have an accelerator rule applied when making written contributions or when making deep, thoughtful insights shared less frequently. Participants identified as sensors in MBTI can have an accelerator rule applied when providing practical and detailed information on a topic of conversation. Participants identified as intuitives in MBTI can have an accelerator rule applied when generating innovative ideas and concepts. Participants identified as thinkers in MBTI can have an accelerator rule applied when making logical and/or analytical contributions to a videoconference. Participants identified as feelers in MBTI can have an accelerator rule applied when making contributions that promote team harmony and morale. Participants identified as judgers in MBTI can have an accelerator rule applied when making structured and organized contributions. Participants identified as preceivers in MBTI can have an accelerator rule applied when making spontaneous and adaptable contributions. A decelerator rule will decrease by multiples and/or subtract from a participants engagement score. A decelerator rule can be applied to all personality classifications when off-topic, out-of-context disruptions are contributed to a videoconference.

Engagement scores can also be increased and/or decreased depending on meeting type. A one-on-one meeting can increase engagement scores for metrics reflecting effective use of time, politeness, minimal talking-over each other. A recurring meeting between a group of individuals (e.g., a team) can increase engagement scores for metrics reflecting participation and/or engagement with the meeting and can carry over historical data. A meeting with three or more participants that is not recurring can increase engagement score for metrics reflecting high participation in the video conference, introducing new topics, and high value comments.

In many embodiments, method 100 can comprise step 105 of receiving one or more video conference feeds. A videoconference feed can comprise a number of different data streams. For example, audio streams, video streams, metadata, and/or user interaction signals can be received in step 105. Audio streams can comprise encoded audio data transmitted from client devices. Audio streams can comprise digitized representations of participants' voices that can be compressed using audio codecs to optimize transmission over network connections. Multiple audio streams can be received simultaneously and/or can be correlated with a specific participant or session. Video streams can be captured by cameras on participant devices. The video streams can be encoded using video compression software to reduce bandwidth requirements while maintaining quality. Video stream can be processed to enable various functions (e.g., resizing, cropping, and/or mixing) for efficient distribution to other participants in the session. Metadata received in step 105 can comprise information about a current videoconference session (e.g., participant identifiers, device capabilities, and/or network conditions). Metadata can be used to optimize a participant experience by allowing a system to adapt audio and video quality dynamically based on available bandwidth and a resources used for real-time engagement score computation and display. User interaction signals can comprise various participant-generated signals, such as join requests, leave requests, chat messages, and/or reactions These signals enable real-time collaboration and/or interaction among participants. User interaction signals can also comprise control commands, such as requests to mute/unmute a microphone, and/or enable/disable video.

In many embodiments, method 100 can comprise step 106 of analyzing one or more contributions of at least one videoconference participant. Elements of one or more data streams for a videoconference can be analyzed in step 106 to determine the one or more contributions of a participant and/or a group of participants. In many embodiments, speech recognition software and/or natural language processing (NLP) software can be applied to a video stream and/or an audio stream for a videoconference to pre-process the streams for better analysis. Speech recognition software can convert spoken language into written text using a combination of signal processing, machine learning, and NLP software. Speech-to-text software can be used to transcribe spoken contributions of one or more participants. NLP software enables machines to analyze, interpret, and generate human language. NLP software can use a one or more of computational linguistics, machine learning, and/or statistical methods to process and understand text or speech data. For example, an LLM can use NLP software to understand written text. Data streams for a videoconference can be analyzed (e.g., by NLP software) as they are received to generate real-time scores for engagement metrics as described in step 101 and/or in-session performance trends can be determined as described in step 102.

In many embodiments, method 100 can comprise step 107 of generating a real time engagement score. Values for engagement metrics (e.g., those generated in step 101) can be added together to generate an engagement score. If one or more accelerators are applied, extra points can be added to an engagement score. If engagement metrics reflect alignment with a meeting type (e.g., one-on-one, recurring, or three or more), then an engagement score can have a multiplier applied. In many embodiments, calculations of a real time engagement score and/or values for one or more engagement metrics can be used to assign one or more awards to participants during a videoconference. For example, a Topic award can be assigned when NLP software identifies a participant as providing deep insight on a videoconference's primary subject. As another example, a Prolific Questions award can be assigned when NLP software identifies a participant as driving discussion by asking critical questions.

In many embodiments, method 100 can comprise step 108 of coordinating displaying a real time engagement score and/or a video conference feed. Displaying of videoconference feeds by a computer can involve a sequence of operations that process elements of video feeds and render them on a visual output device (e.g., a monitor or screen). The operations can be managed by a combination of software and hardware components that ensure real-time rendering and optimal visual quality. A sequence of operations for coordinating displaying a video conference feed can comprise one or more of decoding, buffering, rendering, and/or presentation. Decoding can be implemented in software, hardware, or a combination of both. Decoding can comprise decompressing video streams into frames of a video. During a buffering stage, video frames can be temporarily stored in a buffer to manage timing and/or synchronization. Buffering can ensure smooth playback by compensating for variations in data transmission rates and/or delays. Buffering can also comprise storing audio data to synchronize video streams with associated audio streams. Rendering can comprise preparing video frames for display by converting pixel data into a format suitable for display hardware. Rendering can comprise operations such as color space conversion, scaling to screen resolution of display hardware, and/or applying visual enhancements (e.g., sharpening and/or noise reduction). Graphics processing units (GPUs) or other types of dedicated video rendering hardware can be used to render a videoconference feed. Presentation can comprise transmitting frames to display hardware for presentation to a participant. Presentation can comprise coordinating a timing of frame transmission to match a refresh rate of display hardware, thereby minimizing artifacts (e.g., tearing and/or stuttering). In many embodiments, a video conference feed can be altered to highlight one or more participants. Participant's views of a videoconference can be reoriented (e.g., resized, moved, activated, deactivated, etc.) to spotlight active speakers, engagement score leaders, real-time trends, and/or award winners. Further, amplitude of audio feeds can be modulated to spotlight key contributors and/or deemphasize off topic subjects.

Real-time engagement scores of one or more participants can be displayed in a number of different ways or formats. Real-time scores can be displayed within a graphical user interface (GUI) using one or more methods and/or layouts that ensure accessibility, clarity, and interactivity. The implementation of real-time scores can be designed to enhance participant engagement and highlight participants who contribute substantially to a purpose of a video conference. A ranked scoreboard can provide an area within a GUI where live scores and/or rankings are continuously updated. A scoreboard can comprise names or identifiers of participants, their current engagement score, and additional details about one or more engagement metrics, trends, and/or awards. A floating overlay display can position real-time scores as a semitransparent and/or movable element over videoconference content. This design allows users to monitor scores without disrupting their engagement with the videoconference. A ticker display can present real-time scores in a scrolling format during a video conference. A ticker display can be used to summarize engagement scores and/or metrics from multiple video conferences and/or highlight trends in the same. A ticker can comprise additional information such as awards, past videoconference dates. Real-time scores can be displayed as one or more pop-up notifications within a videoconference. Pop-up notifications can comprise transient elements that draw participant attention to score and/or ranking changes without requiring them to navigate away from the videoconference. Pop-up notifications can comprise animations or sound effects to enhance visibility.

Turning ahead in the drawings, FIG. 2 illustrates a block diagram of a system 200 that can be employed for altering videoconference feeds, as described in greater detail below. System 200 is merely exemplary and embodiments of the system are not limited to the embodiments presented herein. System 200 can be employed in many different embodiments or examples not specifically depicted or described herein. In some embodiments, certain elements or modules of system 200 can perform various procedures, processes, and/or activities. In these or other embodiments, the procedures, processes, and/or activities can be performed by other suitable elements or modules of system 200.

Generally speaking, system 200 can be implemented with hardware and/or software. Part or all of the hardware and/or software implemented in system 200 can be conventional or part or all of the hardware and/or software can be customized (e.g., optimized) for implementing part or all of the functionality of system 200 described herein.

System 200 can include videoconference server 201, scoring server 202, and/or participant devices 203, 204. Videoconference server 201, scoring server 202, and/or participant devices 203, 204 can each be a computer system, such as computer system 300 (FIG. 3), as described above, and can each be a single computer, a single server, a cluster or collection of computers or servers, or a cloud of computers or servers. A single computer system can also host each of two or more of replenishment system 310, web server 320, and/or display system 360.

Participant devices 203, 204 can comprise any of the elements described in relation to computer system 300 (FIG. 3). For example, participant devices 203, 204 can be mobile devices. A mobile device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand. For examples, in some embodiments, a mobile electronic device can occupy a volume of less than or equal to approximately 1790 cubic centimeters, 2434 cubic centimeters, 2876 cubic centimeters, 4056 cubic centimeters, and/or 5752 cubic centimeters. Further, in these embodiments, a mobile electronic device can weigh less than or equal to 15.6 Newtons, 17.8 Newtons, 22.3 Newtons, 31.2 Newtons, and/or 44.5 Newtons.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Blackberry^{®} or similar product by Research in Motion (RIM) of Waterloo, Ontario, Canada, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Blackberry^{®} operating system by Research In Motion (RIM) of Waterloo, Ontario, Canada, (iii) the Palm^{®} operating system by Palm, Inc. of Sunnyvale, California, United States, (iv) the Android^{™} operating system developed by the Open Handset Alliance, (v) the Windows Mobile^{™} operating system by Microsoft Corp. of Redmond, Washington, United States of America, or (vi) the Symbian^{™} operating system by Nokia Corp. of Keilaniemi, Espoo, Finland.

Further still, the term "wearable user computer device" as used herein can refer to an electronic device with the capability to present audio and/or visual data (e.g., text, images, videos, music, etc.) that is configured to be worn by a user and/or mountable (e.g., fixed) on the user of the wearable user computer device (e.g., sometimes under or over clothing; and/or sometimes integrated with and/or as clothing and/or another accessory, such as, for example, a hat, eyeglasses, a wrist watch, shoes, etc.). A wearable user computer device can comprise a mobile electronic device, and vice versa. However, a wearable user computer device does not necessarily comprise a mobile electronic device, and vice versa.

In specific examples, a wearable user computer device can comprise a head mountable wearable user computer device (e.g., one or more head mountable displays, one or more eyeglasses, one or more contact lenses, one or more retinal displays, etc.) or a limb mountable wearable user computer device (e.g., a smart watch, smart ring, etc.). In these examples, a head mountable wearable user computer device can be mountable in close proximity to one or both eyes of a user of the head mountable wearable user computer device and/or vectored in alignment with a field of view of the user.

In more specific examples, a head mountable wearable user computer device can comprise (i) Google Glass^{™} product or a similar product by Google Inc. of Menlo Park, California, United States of America; (ii) the Eye Tap^{™} product, the Laser Eye Tap^{™} product, or a similar product by ePI Lab of Toronto, Ontario, Canada, and/or (iii) the Raptyr^{™} product, the STAR 1200^{™} product, the Vuzix Smart Glasses M100^{™} product, or a similar product by Vuzix Corporation of Rochester, New York, United States of America. In other specific examples, a head mountable wearable user computer device can comprise the Virtual Retinal Display^{™} product, or similar product by the University of Washington of Seattle, Washington, United States of America. Meanwhile, in further specific examples, a limb mountable wearable user computer device can comprise the iWatch^{™} product, or similar product by Apple Inc. of Cupertino, California, United States of America, the Galaxy Gear or similar product of Samsung Group of Samsung Town, Seoul, South Korea, the Moto 360 product or similar product of Motorola of Schaumburg, Illinois, United States of America, and/or the Zip^{™} product, One^{™} product, Flex^{™} product, Charge^{™} product, Surge^{™} product, or similar product by Fitbit Inc. of San Francisco, California, United States of America.

Videoconference server 201, scoring server 202, and/or one or more of participant devices 203, 204 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 303 (FIG. 3). Further, one or more of the display device(s) can be similar or identical to display device 305 (FIG. 3). The input device(s) and the display device(s) can be coupled to the processing module(s) and/or the memory storage module(s) of videoconference server 201, scoring server 202, and/or one or more of participant devices 203, 204 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of videoconference server 201, scoring server 202, and/or one or more of participant devices 203, 204. In a similar manner, the processing module(s) and the memory storage module(s) can be local and/or remote to each other.

Videoconference server 201 can host and/or run one or more videoconference software platforms. Scoring server 202 can host a system for altering videoconferences as described herein. For example, scoring server 202 can perform one or more steps of method 100 (FIG. 1). In some embodiments, scoring server can be embodied in and/or distribute a software application capable of performing one or more steps of method 100 (FIG. 1). The software application can be installed/installable on one or more of participant devices 203, 204.

Videoconference server 201, scoring server 202, and/or participant devices 203, 204 can communicate or interface (e.g., interact) with one another through internet 220. Internet 220 can be an intranet that is not open to the public, a mesh network of individual systems, and/or a distributed system. Accordingly, in many embodiments, videoconference server 201 and/or scoring server 202 (and/or the software used by such systems) can refer to a back end of system 200 operated by an operator and/or administrator of system 200, and participant devices 203, 204 (and/or the software used by such systems) can refer to a front end of system 200 used by one or more participants, respectively. An operator and/or administrator of system 200 can manage system 200, the processing module(s) of system 200, and/or the memory storage module(s) of system 200 using the input device(s) and/or display device(s) of system 200.

Videoconference server 201, scoring server 202, and/or participant devices 203, 204 also can be configured to communicate with one or more databases. The one or more databases can comprise a historical videoconference database that stores records about past videoconferences. A historical videoconference database can also comprise an interaction database containing information about interactions of participant devices with a videoconference. These interactions can be tied to a unique identifier (e.g., an IP address, an advertising ID, device ID, etc.) and/or a user account. In embodiments where a participant interacts with a videoconference before logging into a user account, data stored in the one or more database that is associated with a unique identifier can be merged with and/or associated with data associated with the user account. Data can be deleted from a database when it becomes older than a maximum age, which can be set by an administrator of system 200. Data collected in real-time can be streamed to a database for storage, thereby increasing a storage speed of a database.

The one or more databases can be stored on one or more memory storage modules (e.g., non-transitory memory storage module(s)), which can be similar or identical to the one or more memory storage module(s) (e.g., non-transitory memory storage module(s)) described above with respect to computer system 300 (FIG. 3). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between videoconference server 201, scoring server 202, participant devices 203, 204, and/or the one or more databases can be implemented using any suitable manner of wired and/or wireless communication. Accordingly, system 200 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronic Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

Turning ahead in the drawings, FIG. 3 illustrates a block diagram of a system 300 that can be employed for altering videoconference feeds, as described in greater detail below. System 300 is merely exemplary and embodiments of the system are not limited to the embodiments presented herein. System 300 can be employed in many different embodiments or examples not specifically depicted or described herein. In some embodiments, certain elements or modules of system 300 can perform various procedures, processes, and/or activities. In these or other embodiments, the procedures, processes, and/or activities can be performed by other suitable elements or modules of system 300.

Generally speaking, system 300 can be implemented with hardware and/or software. Part or all of the hardware and/or software implemented in system 300 can be conventional or part or all of the hardware and/or software can be customized (e.g., optimized) for implementing part or all of the functionality of system 300 described herein. When implemented as software, one or more elements of system 300 can be emulated (e.g., reproduced functionally and/or by action via software). For example, a virtual machine having one or more elements described below can be instantiated on one or more elements of system 200 (FIG. 2).

When implemented as hardware, one or more of the elements of system 300 can be coupled together using one or more chassis configured to hold one or more circuit boards and/or serial bus(es). These boards and buses allow the various elements of system 300 to communicate amongst each other to accomplish their intended purposes. While elements of system 300 are described below individually, each can also be integrated into one or more chassis, circuit boards, and/or buses of system 300. On the other hand, one or more elements of system 300 can also be removable (e.g., via a PCI slot on a motherboard and/or a USB port). One or mor elements of system 300 may also be integrated and/or embedded in a different machine or manufacture. Although specific constructions of boards and buses within system 300 are not shown, it should be understood that their construction can be tied to a form factor selected for system 300.

System 300 can take a number of different form factors based on its implementation. For example, system 300 can be implemented as a desktop computer, a laptop computer, a mobile device, and/or a wearable device as described herein. Further, system 300 can comprise a single computer, a single server, a cluster or collection of computers or servers, or a cloud of computers or servers. Typically, a cluster or collection of servers can be used when the demand on 300 exceeds the reasonable capability of a single server or computer, when a distributed structure for system 300 is desired, and/or when parallel computing is desired.

In many embodiments, system 300 can comprise a processor 301, a memory storage 302, an input device 303, a graphics adapter 304, a display device 305, a graphical user interface (GUI) 306, a network adapter 307, a GPS 308, and/or a gyroscope 309.

Generally speaking, processor 301 can comprise any type of computational circuit. For example, processor 301 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 301 can be configured to implement (e.g., run) computer instructions (e.g., program instructions) stored on memory devices in system 300. At least a portion of the program instructions, stored on these devices, can be suitable for carrying out at least part of the techniques and methods described herein. Architecture and/or design of processor 301 can be compliant with any of a variety of commercially distributed architecture families. For example, a processor can have a 32-bit (x86) architecture and/or a 64-bit (x86-64, IA64, and AMD64) architecture. Processor 301 can be configured to perform parallel computing in combination with other elements of system 300 and/or additional processors. Generally speaking, parallel computing can be seen as a technique where multiple elements of system 300 are used to perform calculations simultaneously. In this way, complex and repetitive tasks (e.g., training a predictive software application) can be performed faster and with less processing power than without parallel computing.

Generally speaking, memory storage 302 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 302 can comprise non-transitory memory and/or transitory memory. All or a portion of memory storage 302 can be referred to as memory storage module(s) and/or memory storage device(s). Memory storage 302 can have a number of form factors when used in system 300. For example, memory storage 302 can comprise a magnetic disk hard drive, a solid state hard drive, a removable USB storage drive, a RAM chip, etc.

Memory storage 302 can be encoded with a wide variety of computer code configured to operate system 300. For example, portions of memory storage 302 can be encoded with a boot code sequence suitable for restoring system 300 to a functional state after a system reset. As another example, portions of memory storage 302 can comprise microcode such as a Basic Input-Output System (BIOS) operable with elements of system 300. Further, portions of the memory storage 302 can comprise an operating system (e.g., a software program that manages the hardware and software resources of a computer and/or a computer network). The BIOS can be configured to initialize and test components of system 300 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 303 can be configured to allow a user to interact and/or control elements of system 300. A number of devices and be used as input device 303 alone or in combination. For example, input device 303 can comprise a keyboard, a mouse, a touch screen, a microphone, a camera, etc. Input device 303 can be coupled to other elements of system 300 in a number of ways. For example, input device 303 can be coupled via a Universal Serial Bus (USB) port in a wired and/or wireless manner or via a specialized port (e.g., a PS/2 port) depending on the specific device. User inputs through input device 303 can come in a number of forms. For example, when input device 303 comprises a microphone, user input can be received via voice commands and/or a speech to text software application. As another example, when input device 303 comprises a camera, user input can be received via bodily movements that are captured and interpreted by system 300.

Generally speaking, graphics adapter 304 can be configured to receive and/or generate one or more elements for display on display device 305. Exemplary embodiments of graphics adapter 304 can comprise devices within the NVIDIA^{®} GeForce^{®} and/or the AMD^{®} RX^{®} series of video cards. In many embodiments, a chipset present on graphics adapter 304 can be configured to perform similar, simultaneous computations in a manner more efficient than other chipsets. For example, rendering a 3D scene on graphics adapter 304 can involve repeated geometric calculations performed in parallel to generate the 3D scene. As another example, repeated mathematical calculations involved in training a predictive software application can be performed in parallel on graphics adapter 304 more efficiently thank on processor 301. Display device 305 can receive and display signals from graphics adapter 304. A number of devices can be used as display device 305. For example, display device 305 can comprise a computer monitor, a television, a touch screen display, a heads up display (HUD) medium, etc.

In some embodiments, display device 305 can optionally display graphical user interface (GUI) 306. GUI 306 can be a part of and/or displayed by participant devices 203, 204. With regards to form, GUI 306 can comprise text and/or graphics (image) based user interfaces. For example, GUI 306 can comprise a heads up display (HUD). When GUI 306 comprises a HUD, GUI 306 can be projected onto a medium (e.g., glass, plastic, metal, etc.), displayed in midair as a hologram, and/or displayed on display device 305. GUI 306 can be color, black and white, and/or greyscale. GUI 306 can be implemented as an application running on a computer system, such as computer system 300, videoconference server 201 (FIG. 2), scoring server 202 (FIG. 2), and/or participant devices 203, 204 (FIG. 2). GUI 306 can also comprise a website accessed through a network (e.g., internet 220 (FIG. 2)). For example, GUI 306 can comprise a cloud storage website. When GUI 306 allows for modification and/or changes to one or more settings in system 300, it can be referred to as an administrative (e.g., back end) GUI. GUI 306 can also be displayed as or on a virtual reality (VR) and/or augmented reality (AR) system or display. GUI 306 can receive a number of interactions from a user via input device 303. For example, an interaction with a GUI can comprise a click, a look, a selection, a grab, a view, a purchase, a bid, a swipe, a pinch, a reverse pinch, etc.

Network adapter 307 can be configured to connect system 300 to a computer network by wired communication (e.g., a wired network adapter) and/or wireless communication (e.g., a wireless network adapter). Network adapter 307 can be integrated into one or more chassis, circuit boards, and/or buses or be removable (e.g., via a PCI slot on a motherboard). For example, network adapter 307 can be implemented via one or more dedicated communication chips configured to receive various protocols of wired and/or wireless communications.

GPS 308 can comprise a chipset and/or module configured to communicate with a satellite based location system configured to provide location and time information. (e.g., GPS 230). This location and time information can then be used to determine a location of system 300. Gyroscope 309 can comprise a device that measures and/or maintains orientation and angular velocity. It typically consists of a rotating mass, or rotor, mounted within a frame in such a way that it can freely rotate about one or more axes. This configuration allows the gyroscope to sense changes in movement using the principles of angular momentum and the conservation of rotational energy.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the spirit or scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGs. 1-3 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A method comprising:
analyzing historical videoconference data for a plurality of video conference participants to define one or more engagement metrics;
determining one or more historical performance trends for at least one engagement metric of the one or more engagement metrics for at least one video conference participant of the plurality of video conference participants;
applying one or more behavioral science labels to the at least one video conference participant, wherein the one or more behavioral science labels are determined using the one or more historical performance trends for the at least one engagement metric;
receiving one or more video conference feeds comprising the at least one video conference participant;
analyzing one or more contributions of the at least one video conference participant during the one or more video conference feeds using at least one of the historical videoconference data, the one or more behavioral science labels, the one or more engagement metrics, and a predictive software application;
generating a real time engagement score for the at least one video conference participant based on the analysis of the one or more contributions; and
simultaneously coordinating displaying the real time engagement score and the video conference feed.

2. The method of claim 1 further comprising calibrating a set of real time engagement scoring rules for the at least one video conference participant using the one or more behavioral science labels.

3. The method of claim 2, wherein calibrating the set of scoring rules comprises applying one or more of an accelerator rule and a decelerator rule.

4. The method of any of claims 1 to 3, wherein the one or more engagement metrics comprise one or more pre-determined rubrics configured to promote organizational goals and behaviors that further a purpose of the video conference feed.

5. The method of any preceding claim, wherein coordinating displaying the real time engagement score comprises coordinating displaying a ranked list of video conference participants using a respective real time engagement score of each respective video conference participant of the video conference participants.

6. The method of any preceding claim, wherein the analyzing the one or more contributions of the at least one video conference participant during the one or more video conference feeds comprises:
tracking a talking time for the at least one videoconference participant; and
tracking a response time of other video conference participants to the at least one video conference participant.

7. The method of any preceding claim, wherein coordinating displaying the video conference feed comprises adjusting a configuration of a display window for the videoconference feed to emphasize the at least one video conference participant.

8. One or more articles of manufacture including one or more non-transitory, tangible computer readable storage mediums having instructions stored thereon that, in response to execution by one or more processors, cause the one or more processors to perform the method of any of claims 1 to 7.

9. A system comprising:
one or more processors; and
one or more non-transitory memories storing computing instructions configured to communicate with the one or more processors and cause the one or more processors to perform:
analyzing historical videoconference data for a plurality of video conference participants to define one or more engagement metrics;
determining one or more historical performance trends for at least one engagement metric of the one or more engagement metrics for at least one video conference participant of the plurality of video conference participants;
applying one or more behavioral science labels to the at least one video conference participant, wherein the one or more behavioral science labels are determined using the one or more historical performance trends for the at least one engagement metric;
receiving one or more video conference feeds comprising the at least one video conference participant;
analyzing one or more contributions of the at least one video conference participant during the one or more video conference feeds using at least one of the historical videoconference data, the one or more behavioral science labels, the one or more engagement metrics, and a predictive software application;
generating a real time engagement score for the at least one video conference participant based on the analysis of the one or more contributions; and
simultaneously coordinating displaying the real time engagement score and the video conference feed.

10. The system of claim 9, wherein the computing instructions are further configured cause the one or more processors to perform calibrating a set of real time engagement scoring rules for the at least one video conference participant using the one or more behavioral science labels.

11. The system of claim 9, wherein calibrating the set of scoring rules comprises applying one or more of an accelerator rule and a decelerator rule.

12. The system of any of claims 9 to 11, wherein the one or more engagement metrics comprise one or more pre-determined rubrics configured to promote organizational goals and behaviors that further a purpose of the video conference feed.

13. The system of any of claims 9 to 12, wherein coordinating displaying the real time engagement score comprises coordinating displaying a ranked list of video conference participants using a respective real time engagement score of each respective video conference participant of the video conference participants.

14. The system of any of claims 9 to 13, wherein the analyzing the one or more contributions of the at least one video conference participant during the one or more video conference feeds comprises:
tracking a talking time for the at least one videoconference participant; and
tracking a response time of other video conference participants to the at least one video conference participant.

15. The system of any of claims 9 to 14, wherein coordinating displaying the video conference feed comprises adjusting a configuration of a display window for the videoconference feed to emphasize the at least one video conference participant.
